# EUROPEAN PATENT SPECIFICATION

(11) **EP 0 967 705 B1**
(45) Date of publication and mention of the grant of the patent: **02.01.2002**
(21) Application number: 98401564.4
(22) Date of filing: 25.06.1998
(51) Int. Cl.: H02G 15/18

(54) **Mechanico-retractable sleeve**
Mechanisch schrumpfbare Muffe
Manchon mécaniquement rétractable

(43) Date of publication of application: 29.12.1999
(73) Proprietor: Nexans, 75008 Paris (FR)
(72) Inventor: Brackeniers, Christophe Paul Jozef, 9300 Aalst (BE)
(74) Representative: Feray, Valérie

(56) References cited:
- US-A- 4 332 849

## Description

The present invention relates to a cold shrinkable sleeve comprising:
- a sheet of material resiliently elongated in a first direction and having a plurality of spaced-apart holes extending therethrough in a second direction that is normal to said first direction;
- a plurality of removable spacing means positioned in said holes to hold said sheet in the elongated state; and
- anti-friction means for facilitating the withdrawal of said spacing means whereby said sheet returns to its pre-elongated dimensions.

Such a cold shrinkable sleeve is already known in the art, e.g. from the United States Patent 4,332,849 (Barkus et al.) entitled *"cold shrink cable repair device*" and assigned to AMP Incorporated, *Harrisburg*, *Pa.* Therein, is disclosed a device consisting of a sheet of material that is mechanically expanded or elongated and retained in the expanded state by support struts forming part of the spacing means. The device is used for repairing cables, e.g. a damaged insulating jacket covering an electrical cable such as found in underground mining operations. When the sheet is in the elongated state, it is brought around the cable and the ends thereof are joints together. The spacing means are then removed so that the sleeve shrinks on the cable and exerts a radial pressure thereon.

After being elongated with particular expanding means, and when the spacing means are inserted in the holes in their expanded state, the sheet shrinks back a distance about equal to accumulated widths between the spacing means, i.e. the spaced-apart holes.

A problem with this known sheet is that, when it shrinks back, the internal forces are so high that the spacing means overlap each other. In other words, instead of having a smooth plane upper and lower surface, the sheet has a zigzag-shaped section in the first direction. Because of this, the sheet becomes a rigid structure, very difficult to wrap around a cable or a tube. It also makes the resilient elongation minimal.

An object of the present invention is to provide a cold shrinkable sleeve of the above known type but whereof the longitudinal section in the first direction is not deformed when the expansion force is taken away.

According to the invention, this object is achieved due to the fact that, between said spaced-apart holes, the cross section of said sheet of resilient material is reduced in a predetermined specific way.

In this way, the internal forces, appearing between the spaced-apart holes when the expansion force is removed, are distributed in a controlled way, whereby the longitudinal section of the sheet in the first direction is not negatively affected.

In a first embodiment, the present invention is characterized in that, between said spaced-apart holes, at least one groove is provided, said groove extending through said sheet in said second direction.

It has been proved that this is sufficient to solve the above problem.

In a second embodiment, the present invention is characterized in that, between said spaced-apart holes, at least one second hole relatively smaller than said space-apart holes and extending through said sheet in said second direction is provided.

This relatively smaller hole allows to distribute the internal forces in a specific and controlled way.

It is known, e.g. from the above mentioned U.S. Patent, that it is very difficult to withdraw the support struts by pulling them out of the holes by hand or by means of pliers or similar tool. To facilitate the removal of the struts, i.e. their slipping pass through the holes, a cord is provided. The cord is positioned between the side walls of the holes and the support struts.

However, to maintain the cord in place, the support struts need to have concave or V-shaped side surfaces. The production cost of the spacing means is thereby increased, whilst most of their external surface is still directly into contact with the internal surface of the spaced-apart holes. This system will only work efficiently for relatively low forces.

In another embodiment the cold shrinkable sleeve comprises said removable spacing means including a rectangular support strut that has a rectangular cross-section of which the longest side extends in said second direction, and that said anti-friction means comprises a layer of silicon coated polyester film covering the whole surrounding surface of said spacing means.

By using a silicon coated polyester film covering the surface of the spacing means, it becomes much easier to remove the latter. Indeed, by gliding over both the spacing means and the spaced-apart hole, the retraction of the spacing means is dramatically facilitated.

In known cold shrinkable sleeve, e.g. from the above mentioned U.S. Patent, the left end and the right end of the sheet in the first direction are provided with beveled surfaces that face down at one end and up at the other end. These ends are jointed in overlapping fashion and secured together by an adhesive.

It is easy to understand that the chemical way wherein these ends are jointed is subjected to restrictions in case a relatively fast and/or strong joint is required.

Therefore, in a further embodiment the cold shrinkable sleeve comprises a sheet the left end and the right end of the lower surface of which in said first direction are provided with a plurality of longitudinal grooves extending in said second direction, said grooves being adapted to be jointed and to be maintained together by means of a substantially reverse-U-shaped rail extending in said second direction so as to cover and press together the left and the right end of the upper surface of said sheet.

This mechanical lock provides a fast and strong joint between the ends of the sheet.

In another embodiment, the left end and the right end of which in said first direction are provided with a tubular portion extending in said second direction, in that a rod having a first end and a second end is inserted in the longitudinal hole of said tubular portion, the ends of the rods extending freely outside the tubular holes at both ends thereof, and in that the first/second ends of the rods are attached together by means of a first/second joint piece respectively.

Also this mechanical lock provides a fast and strong joint between the ends of the sheet.

The above and other objects and features of the invention will become more apparent and the invention itself will be best understood by referring to the following description of an embodiment taken in conjunction with the accompanying drawings wherein:
FIGs. 1a, b and c show a resilient sheet 1 constituting a cold shrinkable sleeve;
FIG. 2 shows a first embodiment of the sheet 1;
FIG. 3 shows a second embodiment of the sheet 1;
FIG. 4 represents an unwanted layout of the sheet 1;
FIGs. 5a, b and c show the placement of the sheet 1 around a cable 6 to be protected;
FIG. 6 is a detailed view of ends 7 of the sheet 1 joint together by means of a reverse-U-shaped rail 8;
FIG. 7 is a detailed view of another embodiment of ends 9, 10 of the sheet 1 joint together by means of an attachment piece 13;
FIG. 8 is a cross-sectional view along the axis A-A of FIG. 2 showing a support strut 5 inserted in the sheet 1; and
FIG. 9 shows how the support strut 5 of FIG. 8 is removed from the sheet 1.

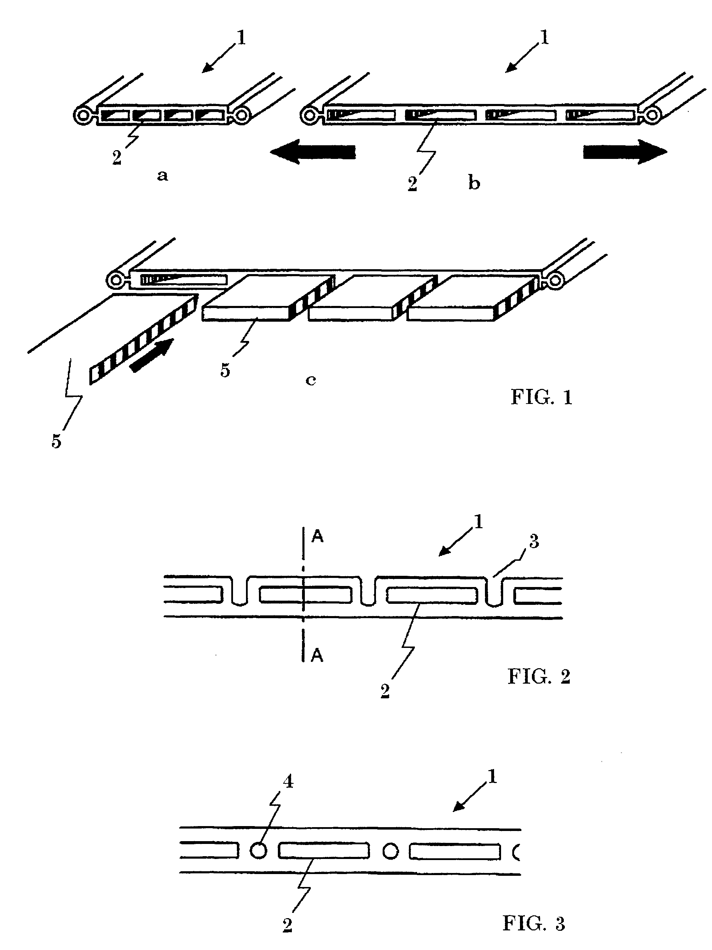

The mechanico-retractable or cold shrinkable sleeve shown in the FIGs. 1a, b and c is used for covering a joint or for repairing tubes or cables, e.g. a damaged insulating jacket covering an electrical cable. The sleeve comprises a sheet, generally referred to by numeral 1, of resilient material provided with several spaced-apart holes 2 extending through the sheet 1 in a direction normal to the face shown on the drawing.

In a first embodiment, shown in FIG. 2, a groove 3 is provided between the spaced-apart holes 2 and extends through the sheet 1 in the normal direction. In a second embodiment, shown in FIG. 3, a small hole 4 is provided between the spaced-apart holes 2. This hole 4, smaller than the spaced-apart holes 2, also extends through the sheet 1 in the normal direction. The purpose of the grooves 3 and small holes 4 is to change the cross section of the sheet 1 for better distributing the internal forces in the sheet when the latter shrinks back as will be explained below by making reference to the FIGs. 1.

Prior to be ready for use, the sheet 1 of the shrinkable sleeve shown at FIG. 1a is expanded or elongated by expanding means (not shown) in the horizontal direction, say in a first direction from left to right as shown by the arrows at FIG. 1b. Rectangular support struts 5, e.g. of plastic, of which the upper, lower and side surfaces are covered by a layer of silicon coated polyester film are then inserted as spacing means in the elongated spaced-apart holes 2, as shown by the arrow at FIG. 1c. It is to be noted that, in their elongated state, these spaced-apart holes 2 can have the same opening in shape and dimensions as the support struts 5 to be inserted therein.

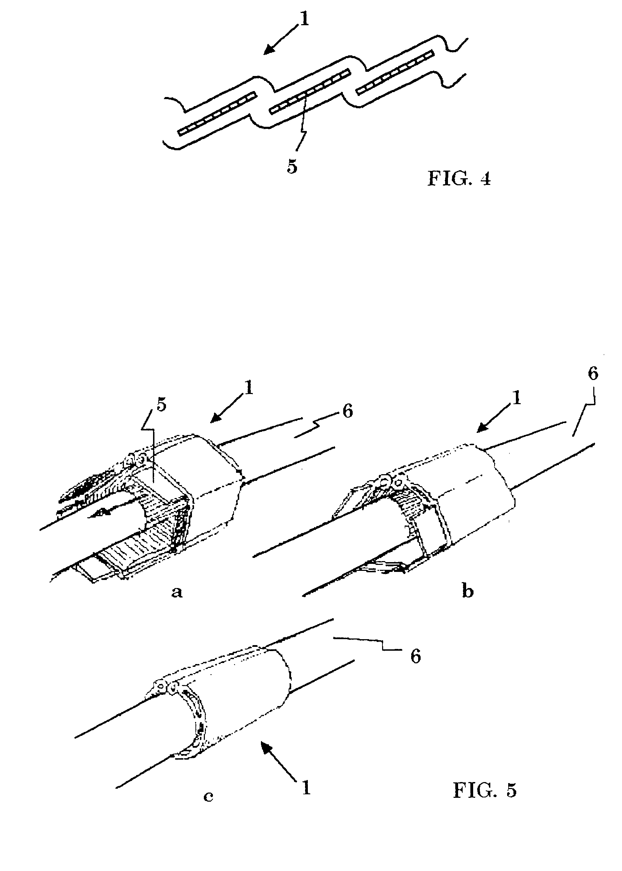

After being elongated by the expanding means and with the spacing means 5 inserted in the spaced-apart holes 2, the expanding means are removed. The sheet 1 then shrinks back for a distance about equal to accumulated widths between the spacing means 5, i.e. between the spaced-apart holes 2. Owing to the above grooves 3 or small holes 4 extending in the - say second - direction normal to the first direction, the internal forces appearing in the shrinked back sheet 1 are distributed in an asymmetrical way so as to avoid the spacing means 5 to overlap each other. Such an unwanted state is shown at FIG. 4 where no grooves nor holes are provided between the spaced-apart holes as it is the above mentioned case in the prior art.

With the spacing means 5 inserted in the spaced-apart holes 2, a flat elongated sheet 1 is obtained. As shown at FIG. 5a, the sheet 1 is then placed around a cable 6 to be repaired and a sleeve is formed by joining the ends of the sheet 1 as represented at FIG. 5b. To perform this junction, the left end and the right end of the sheet 1 are both provided with means to joint them together.

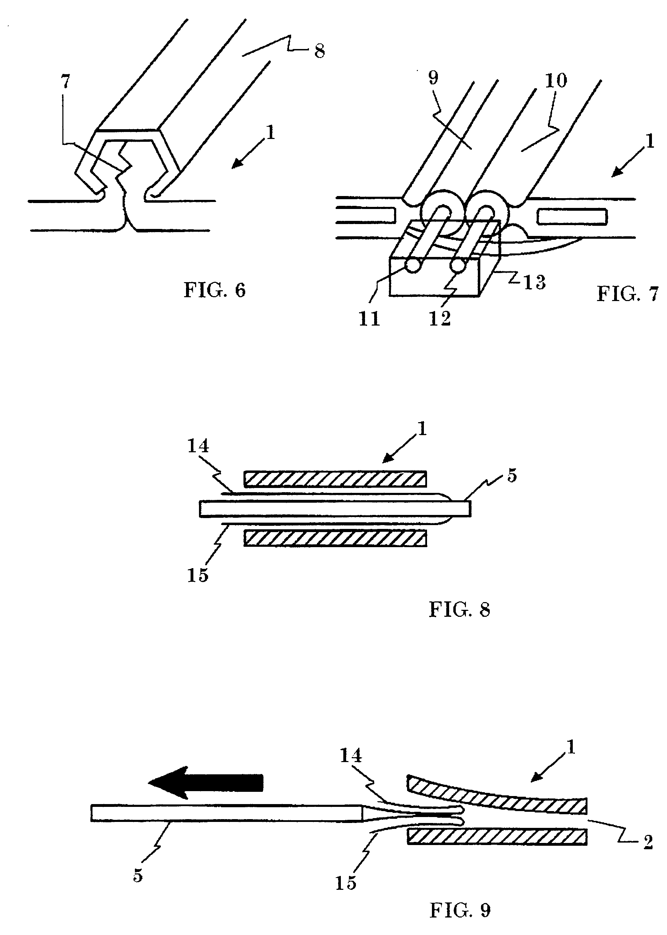

In a first embodiment, these joint means are constituted by a plurality of longitudinal grooves 7 extending, at the lower surface of the sheet 1, in the second direction. When the sheet 1 is placed around the cable 6 to be repaired, these grooves 7 are applied against each other and maintained together by a reverse-U-shaped rail 8, as shown in FIG. 6. The rail 8 extends in said second direction so as to cover and press together the left and the right ends of the sheet 1. Such a mechanical lock provides a fast and strong joint between the ends of the sheet.

In another embodiment, shown at FIG. 7, the left and right ends of the sheet 1 are tubular portions 9, 10 extending in the second direction. Rods 11, 12 are then inserted in the holes of the tubular portions 9, 10. The ends of the rods 11, 12 extend outside the holes and are attached together, at each side of the tubular portions, by a joint piece 13.

As already mentioned, the whole surrounding surface of the rectangular support struts 5 is covered by a layer of silicon coated polyester film 14, 15, of which a cross-sectional view is shown at FIG. 8. This film constitutes an anti-friction device that facilitates the withdrawal of the support struts 5 whereby the sheet 1 then returns to its pre-elongated dimensions.

The withdrawal of the support struts 5 is obtained by pulling them out of the holes 2 in the direction indicated by the arrow, as shown at FIG. 9, by hand or by means of pliers or similar tools. The silicon coated polyester film 14, 15 covering the largest surfaces between the support struts 5 and the spaced-apart holes 2 make this withdrawal operation relatively easy since the latter glide easily over each other.

When the support struts 5 are removed, the sleeve shrinks on the cable 6, as shown at FIG. 5c, and exerts a radial pressure thereon. A waterproof coating of the cable 6 is so obtained. It is to be noted that, to make the coating even more hermetic, a layer of sealing compound (not shown) may be applied to the cable prior to place the sleeve thereon.

While the principles of the invention have been described above in connection with specific apparatus, it is to be clearly understood that this description is made only by way of example and not as a limitation on the scope of the invention, as defined in the appended claims.

## Claims

1. Cold shrinkable sleeve comprising:
- a sheet (1) of material resiliently elongated in a first direction and having a plurality of spaced-apart holes (2) extending therethrough in a second direction that is normal to said first direction;
- a plurality of removable spacing means (5) positioned in said holes (2) to hold said sheet in the elongated state; and
- anti-friction means (14, 15) for facilitating the withdrawal of said spacing means whereby said sheet returns to its pre-elongated dimensions,
**characterized in that**, between said spaced-apart holes (2), the cross-section of said sheet (1) of resilient material is reduced in a predetermined specific way.

2. Cold shrinkable sleeve according to claim 1, **characterized in that**, between said spaced-apart holes (2), at least one groove (3) is provided , said groove extending through said sheet (1) in said second direction.

3. Cold shrinkable sleeve according to claim 1, **characterized in that**, between said spaced-apart holes (2), at least one second hole (4) relatively smaller than said space-apart holes and extending through said sheet (1) in said second direction is provided.

4. Cold shrinkable sleeve according to claim 1, **characterized in that** said removable spacing means (5) includes a rectangular support strut that has a rectangular cross-section of which the longest side extends in said second direction, and **in that** said anti-friction means comprises a layer of silicon coated polyester film (14, 15) covering the whole surrounding surface of said spacing means.

5. Cold shrinkable sleeve according to claim 1, **characterized in that** the left end and the right end of the lower surface of said sheet (1) in said first direction are provided with a plurality of longitudinal grooves (7) extending in said second direction, said grooves being adapted to be jointed and to be maintained together by means of a substantially reverse-U-shaped rail (8) extending in said second direction so as to cover and press together the left end and the right end of the upper surface of said sheet.

6. Cold shrinkable sleeve according to claim 1, **characterized in that** the left end and the right end of said sheet (1) in said first direction is provided with a tubular portion (9, 10) extending in said second direction, **in that** a rod (11, 12) having a first end and a second end is inserted in the longitudinal hole of said tubular portion, the ends of the rods extending freely outside the tubular holes at both ends thereof, and **in that** the first/second ends of the rods are attached together by means of a first/second joint piece (13) respectively.

## Patentansprüche

1. Kalt schrumpfbare Muffe, umfassend:
eine Platte (1) aus einem Material, welches elastisch federnd in einer ersten Richtung gelängt wird, und welches mehrere beabstandete Öffnungen (2) hat, die sich durch diese in einer zweiten Richtung hindurch erstrecken, welche normal zu der ersten Richtung ist; mehrere entfernbare Abstandhaltemittel (5), die in den Öffnungen (2) positioniert werden, um die Platte in ihrem gelängten Zustand zu halten; und
Antireibungsmittel (14, 15) zum Erleichtern des Entfernens dieser Abstandhaltemittel, wobei diese Platte zu ihren Dimensionen vor der Längung zurückkehrt, **dadurch gekennzeichnet, daß** zwischen den beabstandeten Öffnungen (2) der Querschnitt dieser Platte (1) aus elastisch federndem Material in einer vorgegebenen speziellen Weise reduziert ist.

2. Kalt schrumpfbare Muffe gemäß dem Anspruch 1, **dadurch gekennzeichnet, daß** zwischen den beabstandeten Öffnungen (2) wenigstens eine Nut (3) vorgesehen ist, wobei sich diese Nut über die Platte (1) in der zweiten Richtung erstreckt.

3. Kalt schrumpfbare Muffe nach Anspruch 1, **dadurch gekennzeichnet, daß** zwischen den beabstandeten Öffnungen (2) wenigstens eine zweite Öffnung (4) vorgesehen ist, die relativ kleiner als die beabstandeten Öffnungen ist und sich durch die Platte (1) in der zweiten Richtung hindurch erstreckt.

4. Kalt schrumpfbare Muffe nach Anspruch 1, **dadurch gekennzeichnet, daß** die entfernbaren Abstandhaltemittel (5) eine rechteckige Stützstrebe umfassen, welche einen rechteckigen Querschnitt hat, dessen längste Seite sich in der zweiten Richtung erstreckt, und daß die Antireibungsmittel eine Schicht aus silikonbeschichtetem Polyesterfilm (14, 15) umfassen, welcher die gesamte umgebende Fläche der Abstandmittel überdeckt.

5. Kalt schrumpfbare Muffe nach Anspruch 1, **dadurch gekennzeichnet, daß** das in der ersten Richtung linke Ende und das rechte Ende der unteren Fläche der Platte (1) mit mehreren längsverlaufenden Nuten (7) ausgestattet ist, die sich in der zweiten Richtung erstrecken, wobei die Nuten dazu ausgelegt sind, mittels einer Schiene (8) mit einer im wesentlichen umgekehrten U-Form miteinander verbunden und festgehalten zu werden, die sich in der zweiten Richtung erstreckt und das linke Ende und das rechte Ende der oberen Fläche dieser Platte überdeckt und zusammenpreßt.

6. Kalt schrumpfbare Muffe nach Anspruch 1, **dadurch gekennzeichnet, daß** das in der ersten Richtung linke Ende und das rechte Ende der Platte (1) mit einem rohrförmigen Abschnitt (9, 10) ausgestattet ist, der sich in der zweiten Richtung erstreckt, und daß eine Stange (11, 12) mit einem ersten Ende und einem zweiten Ende in die längsverlaufende Öffnung des rohrförmigen Abschnittes gesteckt wird, wobei die Enden der Stangen sich frei nach außerhalb der rohrförmigen Öffnungen an beiden Enden derselben erstrecken, und daß die ersten/zweiten Enden der Stangen jeweils mittels eines ersten/zweiten Verbindungsstückes (13) zusammengehalten werden.

## Revendications

1. Manchon rétrécissable à froid, comprenant :
- une feuille (1) de matière élastiquement allongée dans une première direction et présentant une pluralité de trous espacés (2) se prolongeant à travers elle dans une deuxième direction normale à ladite première direction ;
- une pluralité de moyens d'écartement amovibles (5) mis en place dans lesdits trous (2) pour maintenir ladite feuille dans l'état allongé ; et
- un moyen anti-frottement (14, 15) pour faciliter le retrait desdits moyens d'écartement de sorte que ladite feuille reprenne ses dimensions pré-allongées,
**caractérisé en ce que**, entre lesdits trous espacés (2), la section transversale de ladite feuille (1) de matière élastique est réduite d'une façon spécifique prédéterminée.

2. Manchon rétrécissable à froid selon la revendication 1, **caractérisé en ce que**, entre lesdits trous espacés (2), on prévoit au moins une rainure (3), ladite rainure se prolongeant à travers ladite feuille (1) dans ladite deuxième direction.

3. Manchon rétrécissable à froid selon la revendication 1, **caractérisé en ce que**, entre lesdits trous espacés (2), on prévoit au moins un deuxième trou (4) relativement plus petit que lesdits trous espacés et se prolongeant à travers ladite feuille (1) dans ladite deuxième direction.

4. Manchon rétrécissable à froid selon la revendication 1, **caractérisé en ce que** lesdits moyens d'écartement amovibles (5) comportent une entretoise de support rectangulaire présentant une section transversale rectangulaire dont le côté le plus long se prolonge dans ladite deuxième direction, et ledit moyen anti-frottement comprend une couche de film de polyester revêtu de silicone (14, 15), recouvrant toute la surface périphérique desdits moyens d'écartement.

5. Manchon rétrécissable à froid selon la revendication 1, **caractérisé en ce que** l'extrémité gauche et l'extrémité droite de la surface inférieure de ladite feuille (1) sont pourvues, dans ladite première direction, d'une pluralité de rainures longitudinales (7) se prolongeant dans ladite deuxième direction, lesdites rainures étant adaptées pour être jointes et maintenues ensemble au moyen d'un rail essentiellement en forme de U inversé (8) se prolongeant dans ladite deuxième direction, de manière à recouvrir et à comprimer ensemble les extrémités gauche et droite de la surface supérieure de ladite feuille.

6. Manchon rétrécissable à froid selon la revendication 1, **caractérisé en ce que** l'extrémité gauche et l'extrémité droite de ladite feuille (1) sont pourvues, dans ladite première direction, d'une portion tubulaire (9, 10) se prolongeant dans ladite deuxième direction, **en ce qu'**une tige (11, 12) présentant une première extrémité et une deuxième extrémité est insérée dans le trou longitudinal de ladite portion tubulaire, les extrémités des tiges se prolongeant librement à l'extérieur des trous tubulaires aux deux extrémités de ceux-ci, et **en ce que** les premières/deuxièmes extrémités des tiges sont respectivement attachées ensemble au moyen d'une première/deuxième pièce jointive (13).
